# EUROPÄISCHE PATENTANMELDUNG

(11) **EP 0 553 060 A1**
(43) Veröffentlichungstag der Anmeldung: **28.07.1993**
(21) Anmeldenummer: 93810014.6
(22) Anmeldetag: 19.01.1993
(51) Int. Cl.: B65G 1/08, B65G 1/06, B65G 19/26

(54) **Vorrichtung zum Fördern von Rollfahrzeugen**

(30) Priorität: 20.01.1992 CH 139/92
(71) Anmelder: DREIER-ROBOT AG, CH-4253 Liesberg 1 (CH)
(72) Erfinder: Dreier, Erich, CH-4245 Kleinlützel (CH)
(74) Vertreter: Rottmann, Maximilian R.

(57) **Zusammenfassung**

Die Vorrichtung zum Fördern von schienengebundenen Rollfahrzeugen (2a... 2c) umfasst eine gefällebehaftete Schienenfahrbahn (1), bei der die Rollfahrzeuge (2a... 2c) am höher gelegenen Eingabeende (A) der Schienenfahrbahn in diese eingegeben werden und am tiefer gelegenen Entnahmeende (B) derselben die Schienenfahrbahn verlassen. Entlang der Schienenfahrbahn (1) sind Mittel zum Beeinflussen der Bewegung der Rollfahrzeuge (2a... 2c) vom Eingabeende (A) zum Entnahmeende (B) der Schienenfahrbahn angeordnet. Die Schienenfahrbahn (1) besitzt ein solches Gefälle, dass die am Eingabeende (A) in die Schienenfahrbahn (1) eingegebenen Rollfahrzeuge (2a...2c) unter Wirkung der Schwerkraft selbstätig zum Entnahmeende (B) hin rollen. Zum Beeinflussen der Bewegung der Rollfahrzeuge (2a...2c) ist mindestens ein endlos mit vorwählbarer Geschwindigkeit entlang der Schienenfahrbahn (1) umlaufendes Mitnehmerorgan (9a...9d) vorgesehen, welches derart mit den Rollfahrzeugen (2a...2c) zusammenwirkt, dass sich diese mit der genannten vorwählbaren Geschwindigkeit entlang einer vorbestimmten Strecke der Schienenfahrbahn (1) bewegen.

## Beschreibung

Die vorliegende Erfindung bezieht sich auf eine Vorrichtung zum Fördern von gegebenenfalls mit Gütern beladenen, schienengebundenen Rollfahrzeugen. Diese Vorrichtung weist eine gefällebehaftete Schienenfahrbahn auf, bei der die Rollfahrzeuge am höher gelegenen Eingabeende der Schienenfahrbahn in diese eingegeben werden und am tiefer gelegenen Entnahmeende derselben die Schienenfahrbahn verlassen. Weiter sind entlang der Schienenfahrbahn angeordnete Mittel zum Beeinflussen der Bewegung der Rollfahrzeuge vom Eingabeende zum Entnahmeende der Schienenfahrbahn vorgesehen.

Insbesondere betrifft die Erfindung betrifft ein Vorrichtung zum Fördern und zur Regulierung der Fördergeschwindigkeit von Rollpaletten bzw. Rolluntersätzen. Die mit Gütern beladenen Rollpaletten bzw. Rolluntersätze werden für den Güterfluss in Durchlauflagern oder bei Förderlinien nach dem Stand der Technik auf Schienen mit einem geringen Gefälle in Förderrichtung geführt. Dabei wird die Förderung durch die Wirkung der Schwerkraft unterstützt.

Durchlauflager mit Rolluntersätzen als Ladeträger sind bekannt.

Bei diesen bekannten Ausführungen besteht das Problem, dass Bahnen mit Gefälle bei einer unkontrollierten Fördergeschwindigkeit und unerwünschten Beschleunigungen bei unterschiedlichen Gewichten der bewegten Güter nicht mit der erforderlichen Funktionssicherheit betrieben werden können und dass Beschädigungen der Ladung durch unkontrollierte Aufprallkräfte entstehen können.

Mit mechanischen Zusatzeinrichtungen wurde anhand verschiedener Lösungen versucht, diese Probleme zu lösen. Solche Vorrichtungen sind z.B. aus der DE-PS 26 22 017 und DE-PS 3 44 211 bekannt. Bei diesen Vorrichtungen werden auf Schubstangen montierte Mitnehmer als Vorschubelement für die Rolluntersätze eingesetzt. Ein wesentlicher Nachteil dieser Einrichtungen besteht darin, dass der Vorschub der Rolluntersätze über diese Mitnehmer alternierend mit der Zuhilfenahme von separaten Antriebsorganen erfolgen muss. Das Gefälle der Bahnen darf hier aber nur so gering sein, dass die Rolluntersätze nicht von selbst aus dem Stillstand anlaufen können bzw. dass sich die Rolluntersätze, einmal in Bewegung, nicht unter Wirkung der Schwerkraft beschleunigen können. Dies kann insbesondere bei unterschiedlichen Lasten nicht immer sichergestellt werden. Es folgt daraus, dass eine kontinuierliche und kontrollierte Vorwärtsbewegung der Rolluntersätze bei diesen Lösungen nicht sichergestellt ist.

Eine weitere Vorrichtung ähnlicher Art ist aus der DE 39 11 275 A1 bekannt. Bei dieser Lösung wird versucht, alternierend mit impulsartigen Bewegungen über Vorschubstangen, die mit elastischen Walzen bestückt sind, die Rolluntersätze auf horizontal angeordneten Bahnen vorwärts zu bewegen. Diese Lösung weist mehrere Nachteile auf. Neben der aufwendigen und verschleissgefährdeten Mechanik müssen die Rolluntersätze mit Elementen für die Übertragung der Vorschubbewegungen von den elastischen Walzen auf den Rolluntersatz ausgerüstet sein, was die Rolluntersatzausführung einschränkt und verteuert. Auch bei dieser Lösung ist die Bewegung der Rolluntersätze nicht kontinuierlich, da der Hub in der Praxis kürzer ist als die Rolluntersatzlänge. Zudem ist bei dieser Vorrichtung Bedingung, dass das Fördermittel für die Ein- bzw. Auslagerung der Rolluntersätze in einem Kanallager (z.B. das Regalbediengerät, der Verschiebewagen etc.) mit einer alternierenden Antriebsvorrichtung ausgerüstet sein muss. Diese Lösung hat den Nachteil, dass das Fördermittel so lange vor dem Lagerkanal stehen muss, bis der Rolluntersatz mit den impulsartigen Bewegungen ein- resp. ausgelagert ist, was zu ungünstigen Umschlagsleistungen führt.

Aufgabe der Erfindung ist es, eine Vorrichtung der gattungsgemässen Art so weiterzubilden, dass auf einfache Weise sichergestellt, dass Rolluntersätze mit unterschiedlichen Lasten mit einer wählbaren und kontinuierlichen Fördergeschwindigkeit sicher gefördert werden und dass auf den Förderbahnen mehrere Rolluntersätze aufgestaut werden können.

Diese Aufgabe wird bei der gattungsgemässen Vorrichtung durch die kennzeichnenden Merkmale des Patentanspruchs 1 gelöst.

Weiterbildungen der Erfindung sind in den abhängigen Ansprüchen 2-14 beschrieben.

Die mit der Erfindung erzielten Vorteile bestehen insbesondere darin, dass ein umlaufendes Antriebselement in Form einer Kette oder eines ähnlichen Kraftübertragungselementes (z.B. Riemen, Seil etc.) mit einer oder mehreren Rückhaltevorrichtungen vorgeshen sein kann, welche verhindern, dass sich Rolluntersätze auf den in Förderrichtung geneigten Bahnen beschleunigen können. Das Kraftübertragungselement kann mit einem Antrieb, der gegebenenfalls mit einer Bremse ausgerüstet ist, gekoppelt sein; die Fördergeschwindigkeit kann dadurch wahlweise je nach Art und Empfindlichkeit des Förder- bzw. Lagergutes bestimmt werden. Die Rückhaltevorrichtung kann als abklappbare Klinke ausgebildet und am Kraftübertragungselement in einem Drehpunkt federnd gelagert sein. Ein weiterer Vorteil dieser federnden Klinke besteht darin, dass die Federkraft so gewählt werden kann, dass nach erfolgten Auslagerungen am Ende der Durchlaufkanäle, der Wiederanlauf der restlichen im Kanal befindlichen Rolluntersätze durch die Federkraft auch bei geringen Bahnneigungen gewährleistet ist. Durch die der Erfindung zugrundeliegende Vorrichtung ist auch der Vorteil gegeben, dass die Fördermittel (Regalbediengeräte, Verschiebewagen etc.) mit vielen bekannten Lastaufnahmemitteln eingesetzt werden können und systembedingte Sonderkontruktionen nicht erforderlich sind.

Im folgenden wird ein Ausführungsbeispiel der erfindungsgemässen Vorrichtung unter Bezugnahme auf die beiliegenden Zeichnungen näher beschrieben. In den Zeichnungen zeigen:
- Fig. 1: eine rein schematische Seitenansicht der Vorrichtung zur Erläuterung des Prinzips;
- Fig. 2: eine detailliertere Seitenansicht einer Förderstrecke;
- Fig. 3: einen vergrösserten Ausschnitt aus Fig. 2;
- Fig. 4: eine Ansicht der Eingabeseite einer Förderstrecke von oben;
- Fig. 5: einen schematischen Querschnitt durch eine Förderstrecke;
- Fig. 6a + 6b: Detailansichten eines Förderelements und eines Mitnehmers von der Seite und von oben; und
- Fig. 7: einen Querschnitt durch das Förderelement und das Mitnehmerorgan.

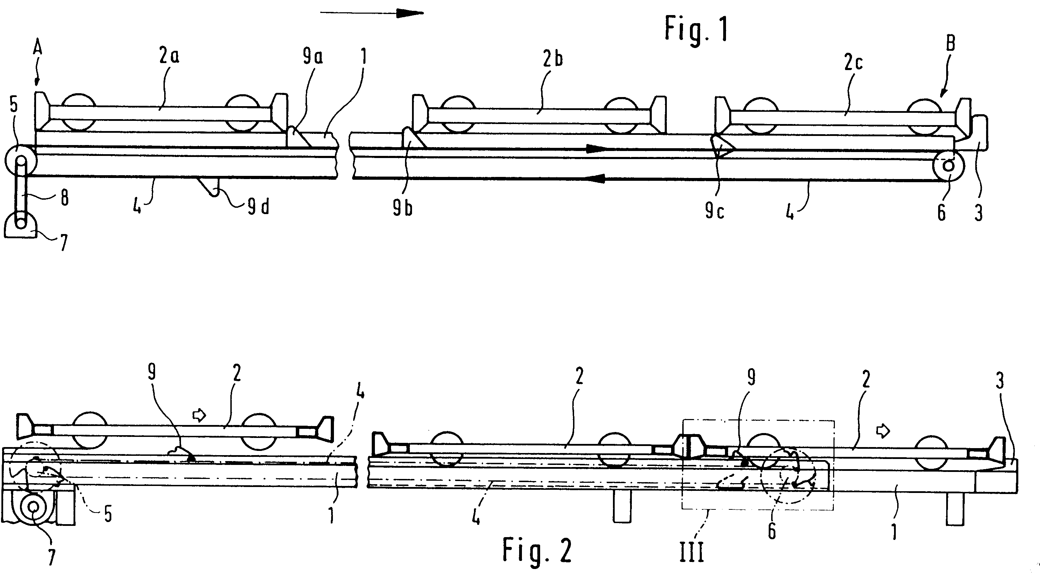

In der Fig. 1 ist eine schematische Seitenansicht einer Förderstrecke für gegebenenfalls mit Gütern beladene Rollfahrzeuge dargestellt. Es kann sich dabei z.B. um eine Schienenfahrbahn handeln, um die Rollfahrzeuge von einem Ort eines Lagerhauses an einen anderen zu bringen, oder um einen einzelnan Lagerkanal eines Durchlaufregallagers.

Generell weist die Vorrichtung eine Schienenfahrbahn mit zwei parallel verlaufenden Schienen 1 auf, die eine Einlauf- oder Eingabeseite A und ein Auslauf- oder Entnahmeende B besitzt. Auf der Schienenfahrbahn sind Rollfahrzeuge 2a...2c verfahrbar. Die Schienen 1 weisen ein Gefälle in Richtung von A nach B auf, welches so bemessen ist, dass ein Rollfahrzeug 2a...2c, einmal im Bereich der Einlauf- oder Eingabeseite A auf die Schienen 1 aufgesetzt, selbstätig gegen das Auslauf- oder Entnahmeende B rollt. Als praxisbezogener Wert hat sich ein Gefälle in der Grössenordnung von 0.5 bis 2% herausgestellt, bei Rolluntersätzen für pallettierte Güter etwa im Bereich von 1 bis 1.4 %. Um ein Überfahren des Schienenendes zu vermeiden, ist im Bereich des Auslauf- oder Entnahmeendes B ein Endanschlag 3 vorgesehen, der in bekannter Weise von einer in die Bewegungsbahn der Rollfahrzeuge 2a...2c ragenden Wirkstellung in eine ausserhalb der Bewegungsbahn der Rollfahrzeuge 2a...2c liegende Ruhestellung verschwenkbar sein kann.

Bei den Rollfahrzeugen kann es sich um an sich bekannte Rolluntersätze handeln, die zur Aufnahme einer mit zu lagernden oder zu transportierenden Gütern beladenen Palette geeignet ist und die im wesentlichen einen rechteckigen Rahmen mit vier Rollen aufweist; hierauf wird im folgenden noch näher eingegangen werden.

Ohne zusätzliche Mittel zur Beeinflussung der Bewgungsgeschwindigkeit der Rollfahrzeuge wäre die Bewegung der Rollfahrzeuge völlig unkontrolliert: Das Gefälle muss genügend gross sein, um ein selbstätiges Anrollen aller Rollfahrzeuge zu gewährleisten, auch solcher, deren Rollwiderstand überdurchschnittlich gross ist oder die nicht oder mit einer nur sehr geringen Last beladen sind. Schwer beladene Rollfahrzeuge und/oder solche mit einem überdurchschnittlich geringem Rollwiderstand erreichen dabei aber eine unerwünscht hohe Geschwindigkeit. Man wird daher ein solches Gefälle wählen, welches im Normalfall ein selbstätiges Anrollen aller in der Praxis vorkommenden Rollfahrzeuge gewährleistet; dabei ist aber nicht garantiert, dass unbedingt in jedem Fall ein selbstätiges Anrollen der Rollfahrzeuge erreicht wird, und dass einzelne Rollfahrzeuge nicht eine unerwünscht hohe Geschwindigkeit erreichen.

Aus diesen Gründen ist die Vorrichtung gemäss der Erfindung mit entlang der Schienenfahrbahn angeordneten Mitteln zum Beeinflussen der Bewegung der Rollfahrzeuge auf ihrem Weg von der Einlauf- oder Eingabeseite A zum Auslauf- oder Entnahmeende B versehen. Die Hauptaufgabe dieser Mittel besteht darin, die Geschwindigkeit der Rollfahrzeuge unter Kontrolle zu halten, d.h. zu langsame oder stillstehende Rollfahrzeuge zu beschleunigen bzw. in Bewegung zu versetzen und zu schnell rollende Rollfahrzeuge abzubremsen.

Zu diesem Zweck ist die Schienenfahrbahn mit einem endlos umlaufenden Förderelement 4 versehen, das z.B. durch eine über Umlenkräder 5 und 6 umlaufende Kette gebildet sein kann. Es versteht sich, dass anstelle der Kette auch ein Riemen, ein Seil, ein Band oder ähnliche langgestreckte Elemente verwendet werden können. Das eine, z.B. das einlaufseitige Umlenkrad 5 steht über einen Riemen 8 mit einem Antriebselement 7 in Verbindung. Dieses treibt das Förderelement 4 zu einer konstanten Umlaufgeschwindigkeit an, die wählbar und vorzugsweise so bemessen ist, dass das Rollfahrzeug 2a, das auf die am Endanschlag 3 aufgestauten Rollfahrzeuge anstösst, sanft auf diese auffährt.

Das Förderelement 4 ist mit mindestens einem Mitnehmerorgan 9 versehen; in der Prinzipskizze gemäss Fig. 1 sind vier Mitnehmerorgane 9a...9d dargestellt. Diese sind derart am Förderelement 4 angeordnet, dass sie in einer Wirkstellung vom Förderelement 4 abstehen und in die Bewegungsbahn der Rollfahrzeuge 2a...2c ragen, aber in eine zurückverschwenkte Stellung (in Fig. 1 im Gegenuhrzeigersinn) entgegen der Wirkung einer hier nicht gezeigten Feder verschwenkbar sind.

Die prinzipielle Funktionsweise der in Fig. 1 dargestellten Vorrichtung ist wie folgt:

Ein Rollfahrzeug 2a wird an der Einlauf- oder Eingabeseite A auf die Schienen 1 aufgesetzt und beginnt, gegen das Auslauf- oder Entnahmeende B zu rollen. Dabei stösst es mit seiner Stirnseite gegen die in Bewegungsrichtung hintere Seite des Mit- nehmerorgans 9a. Dadurch wird das Rollfahrzeug an einer weite- ren Beschleunigung gehindert und bewegt sich mit der durch die Umlaufgeschwindigkeit der Mitnehmerorgane 9 vorgegebenen Ge- schwindigkeit. Das Rollfahrzeug 2b ist aus irgend einem Grund zum Stillstand gekommen, z.B. weil es einen überdurchschnitt- lich hohen Rollwiderstand besitzt. Das Mitnehmerorgan 9b stösst mit seiner vorlaufenden Fläche gegen die Rückseite des Roll- fahrzeugs 2b und setzt dieses wieder in Bewegung. Das Rollfahr- zeug 2c ist gegen den Endanschlag 3 gestossen und kann sich so- mit nicht weiter bewegen. Infolge der schwenkbaren Aufhängung der Mitnehmerorgane 9 taucht das Mitnehmerorgan 9c aus der Be- wegungsbahn des Rollfahrzeugs hinunter, so dass die Bewegung des umlaufenden Förderelements 4 nicht behindert wird.

Bei sequentieller Einlagerung jeweils eines Rollfahrzeugs 2a z.B. in den Kanal eines Lagerfachs genügt es, einen einzigen Mitnehmer 9 vorzusehen. Dabei wird so vorgegangen, dass in Wartestellung das umlaufende Förderorgan 4 in einer solchen Position angehalten wird, in der der Mitnehmer (9a in Fig. 1) etwa eine Rollfahrzeuglänge von der Einlauf- oder Eingabeseite A entfernt ist. Dadurch stösst das Rollfahrzeug 2a an die Rückseite des Mitnehmers (9a in Fig. 1) an und wird am unkontrollierten Weiterrollen gehindert. Nun wird das Förderelement 4 in Umlauf gesetzt, so dass sich das Rollfahrzeug 2a mit derselben Geschwindigkeit in Bewegung setzt wie die Umlaufgeschwindigkeit des Förderelements 4 und damit des Mitnehmers 9a.

Nun wird angenommen, dass sich die Beweungsgeschwindigkeit des Rollfahrzeugs plötzlich verringert oder dass dieses ganz zum Stillstand kommt. Dadurch läuft der Mitnehmer 9 vom Rollfahrzeug weg. Weil aber das Förderelement endlos umlaufend ist, wird der Mitnehmer 9 nach einer gewissen Zeit am in Fahrtrichtung gesehen hinteren Ende des Rollfahrzeugs auf dieses stossen und es wieder in Bewegung setzen. Dies ist die Situation wie in Fig. 1 anhand des Rollfahrzeugs 2b und des Mitnehmers 9b dargestellt. Schliesslich wird das Rollfahrzeug an den Endanschlag 3 anstossen; diese Situation ist in Fig. 1 anhand des Rollfahrzeugs 2c dargestellt. Es kann nicht weiterrollen oder weiter gefördert werden, und vermöge seiner Schwenkbarkeit taucht der Mitnehmer 9c aus der Bewgungsbahn der Rollfahrzeuge 2a...2c heraus und läuft wieder in seine ursprüngliche Position zurück, wie es durch den Mitnehmer 9a symbolisiert ist. Danach kann das Förderelement 4 angehalten werden, bis das nächste Rollfahrzeug eingelagert wird.

Sinngemäss gilt natürlich genau dasselbe, wenn Rollfahrzeuge entlang einer Förderstrecke zu verschieben sind. Ebenfalls sinngemäss dasselbe gilt, wenn schon Rollfahrzeuge am Ende der Förderstrecke gestaut sind; das zuletzt eingegebene Rollfahrzeug wird auf den gestauten Pulk auffahren, wobei der Mitnehmer 9, der das zuletzt eingegebene Rollfahrzeug gebremst und/oder angetrieben hat, unter den bereits gestauten Rollfahrzeugen durchtauchen wird.

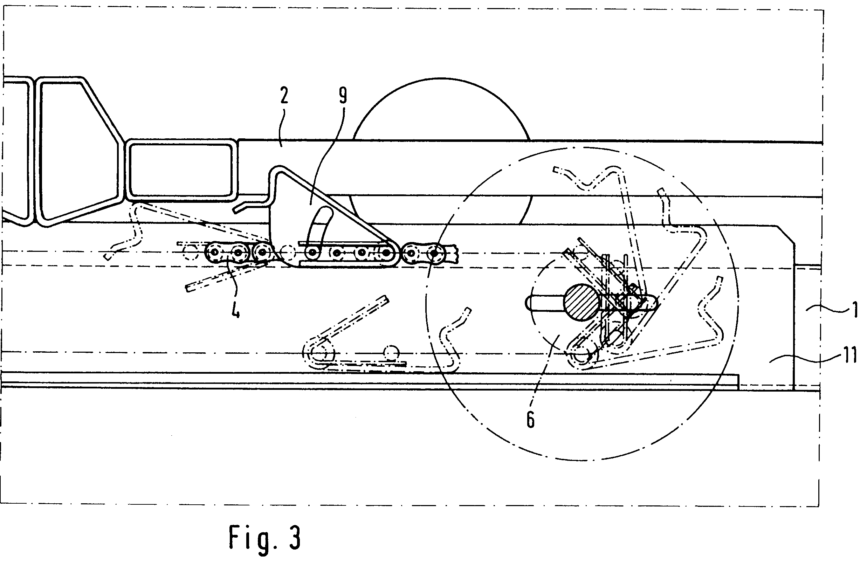

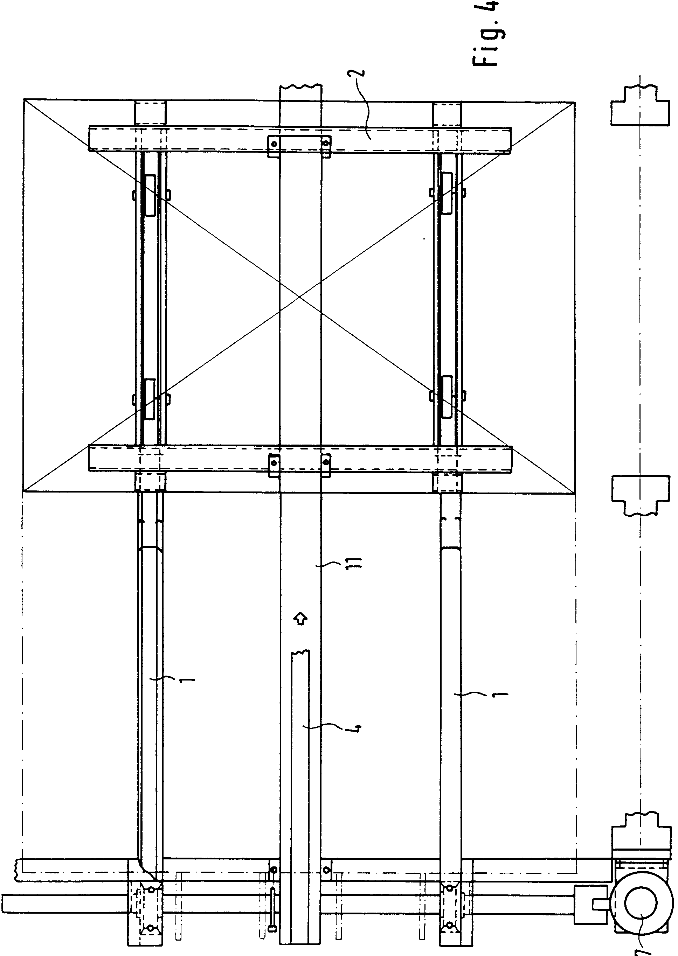

In den Figuren 2 bis 7 ist ein praktisches Ausführungsbeispiel der Vorrichtung dargestellt. Es handelt sich dabei um einen einzelnen Kanal zur Lagerung einer Mehrzahl von mit Paletten 10 beladenen Rollfahrzeugen 2 innerhalb eines Regallagers. In den Fig. 2 und 4 ist eine Förderstrecke in Seiten- bzw. in Draufsicht zu sehen. Die Schienen zur Aufnahme der Rollfahrzeuge 2 sind wiederum mit 1 bezeichnet. Zwischen den Schienen 1 ist ein Profil 11 angeordnet, entlang welchem parallel nebeneinander zwei Ketten 4 umlaufen. Diese sind mittels Umlenkrädern 5 und 6 geführt. Zwischen den beiden Ketten 4 sind Mitnehmer 9 angeordnet.

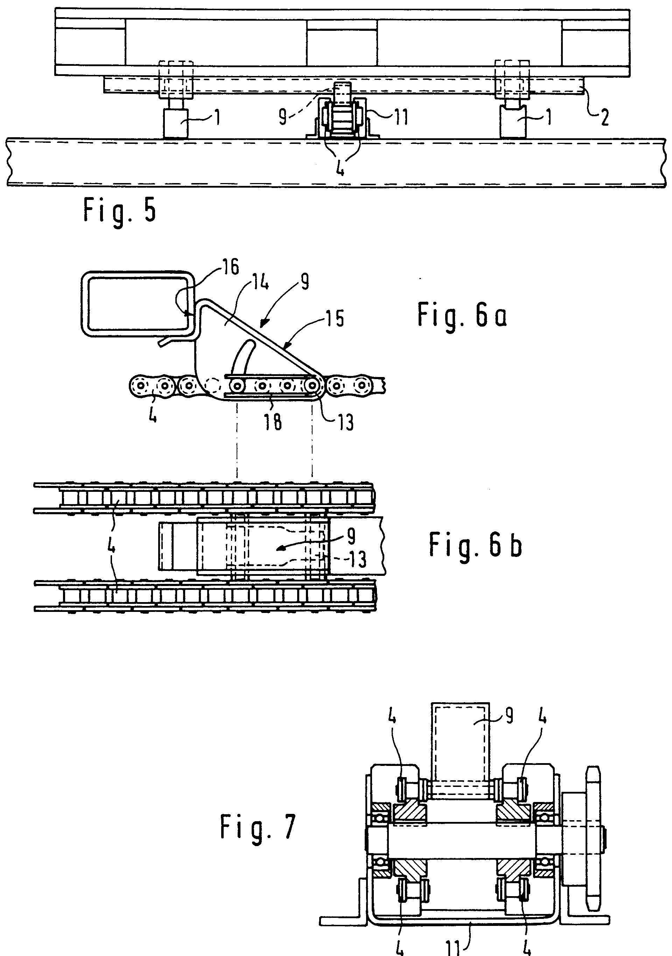

Der Aufbau der Mitnehmer 9 geht aus der Fig. 6 hervor. Jeder Mitnehmer weist einen keilförmigen Körper 14 auf, der auf einer Achse 13 schwenkbar an den beiden Ketten 4 gelagert ist. Der keilförmige Körper 14 besitzt eine in Bewegungsrichtung vorne liegende, gegenüber den Ketten 4 in einem spitzen Winkel geneigt verlaufende Mitnehmerfläche 15 und eine weitere, in Bewegungsrichtung hinten liegende, relativ zu den Ketten 4 etwa senkrecht stehende Mitnehmerfläche 16. Die Mitnehmerfläche 16 dient dazu, gegen die Quertraverse 17 eines gegen sie auffahrenden Rollfahrzeugs 2 anzuliegen, um das Rollfahrzeug abzubremsen bzw. dieses zu veranlassen, sich genau mit der Umlaufgeschwindigkeit der Ketten 4 zu bewegen. Es leuchtet ein, dass sich der Mitnehmer 9 nicht gegen unten verschwenken kann, wenn ein Rollfahrzeug 2 mit seiner Quertraverse 17 gegen die Fläche 16 anliegt. Wenn hingegen der Mitnehmer 9 gegen die Quertraverse 17 eines in Bewegungsrichtung der Ketten 4 voraus liegenden Rollfahrzeuges 2 stösst, kommt eine Feder 18 zur Wirkung, die den Mitnehmer in seiner ausgeschwenkten Stellung zu halten bestrebt ist. Stösst der Mitnehmer auf einen stillstehenden, im übrigen aber in seiner Bewegung nicht blockierten (nicht gestauten) Rolluntersatz, gibt die Feder 18 noch nicht nach, der Mitnehmer 9 bleibt ausgeschwenkt und der stillstehende Rolluntersatz 2 wird in Bewegung versetzt. Wenn der Rolluntersatz 2 hingegen gestaut ist und sich nicht weiter bewegen kann, wird die Kraft, mit der der Mitnehmer 9 gegen die Quertraverse 17 stösst, so gross, dass der Mitnehmer 9 entgegen der Kraft der Feder 18 gegen unten aus der Bewegungsbahn des Rolluntersatzes 2 herausschwenkt.

Zusammengefasst lässt sich folgendes sagen:

Die mit der Erfindung erzielten Vorteile bestehen insbesondere darin, dass ein umlaufendes Förderelement in Form einer Kette oder eines ähnlichen Kraftübertragungselementes (z.B. Riemen, Seil etc.) mit einer oder mehreren Rückhaltevorrichtungen (in Form der Mitnehmer) verhindert, dass sich Rolluntersätze auf den in Förderrichtung geneigten Bahnen beschleunigen können. Das Kraftübertragungselement wird mit einem Antrieb oder einer Bremse gekoppelt; die Fördergeschwindigkeit kann dadurch wahlweise je nach Art und Empfindlichkeit des Förder- bzw. Lagergutes bestimmt werden. Die Rückhaltevorrichtung ist als abklappbare Klinke ausgebildet und am Kraftübertragungselement in einem Drehpunkt federnd gelagert. Ein weiterer Vorteil dieser federnden Klinke besteht darin, dass die Federkraft so gewählt werden kann, dass nach erfolgten Auslagerungen am Ende der Durchlaufkanäle der Wiederanlauf der restlichen im Kanal befindlichen Rolluntersätze durch die Federkraft auch bei geringsten Bahnneigungen gewährleistet ist. Durch die der Erfindung zugrundeliegende Vorrichtung ist auch der Vorteil gegeben, dass die Fördermittel (Regalbediengeräte, Verschiebewagen etc.) mit vielen bekannten Lastaufnahmemitteln eingesetzt werden können und systembedingte Sonderkontruktionen nicht erforderlich sind.

Bei der Einlagerung bzw. beim Einlauf des Rolluntersatzes in einen Förderkanal ist ein Mitnehmer so positioniert, dass der Rolluntersatz durch das Fördermittel unmittelbar hinter dem Mitnehmer abgesetzt werden kann, oder dass das Kraftübertragungselement beim Einlauf des Rolluntersatzes mit der gleichen Fördergeschwindigkeit wie das Fördermittel verschoben wird. Die kontinuierliche Fördergeschwindigkeit wird wahlweise durch einen Antrieb oder eine Bremse, die mit dem Kraftübertragungselement gekoppelt sind, erreicht. Auf der Auslaufseite der Bahn ist bei Durchlaufkanälen in der Regel ein Anschlag vorgesehen. Bei Förderlinien ist dieser Anschlag automatisch abklappbar. Ein weiterer Vorteil der Erfindung besteht darin, dass durch eine oder mehrere Mitnehmer sichergestellt werden kann, dass bei der Auslagerung bzw. beim Weitertransport eines Rolluntersatzes die restlichen im Kanal befindlichen Rolluntersätze mit einer geringeren Fördergeschwindigkeit, als die durch die Schwerkraft erzeugte Auslager-, bzw. Weitertransportgeschwindigkeit, vorwärtsbewegt werden können und dadurch die dynamischen Kräfte auf den Anschlag am Ende des Kanals durch die gewählte Geschwindigkeit gering und wählbar bleiben. Damit Durchlauflager nach der dieser Erfindung zugrundeliegenden Vorrichtung auf einfache Art gelöst werden können, besteht auch die Möglichkeit, mehrere Durchlaufkanäle gemeinsam mit einem Antrieb, bzw. einer Bremse zu koppeln.

## Patentansprüche

1. Vorrichtung zum Fördern von gegebenenfalls mit Gütern beladenen, schienengebundenen Rollfahrzeugen (2a...2c), mit einer gefällebehafteten Schienenfahrbahn (1), bei der die Rollfahrzeuge (2a...2c) am höher gelegenen Eingabeende (A) der Schienenfahrbahn in diese eingegeben werden und am tiefer gelegenen Entnahmeende (B) derselben die Schienenfahrbahn verlassen, mit entlang der Schienenfahrbahn (1) angeordneten Mitteln zum Beeinflussen der Bewegung der Rollfahrzeuge (2a...2c) vom Eingabeende zum Entnahmeende der Schienenfahrbahn, dadurch gekennzeichnet, dass die Schienenfahrbahn (1) ein solches Gefälle besitzt, dass die am Eingabeende (A) in die Schienenfahrbahn (1) eingegebenen Rollfahrzeuge (2a...2c) unter Wirkung der Schwerkraft selbstätig zum Entnahmeende (B) hin rollen, und dass die Mittel zum Beeinflussen der Bewegung der Rollfahrzeuge (2a...2c) mindestens ein endlos mit vorwählbarer Geschwindigkeit entlang der Schienenfahrbahn (1) umlaufendes Mitnehmerorgan (9a...9d) aufweisen, welches derart mit den Rollfahrzeugen (2a...2c) zusammenwirkt, dass sich diese mit der genannten vorwählbaren Geschwindigkeit entlang einer vorbestimmten Strecke der Schienenfahrbahn (1) bewegen.

2. Vorrichtung nach Anspruch 1, dadurch gekennzeichnet, dass die Mittel zum Beeinflussen der Bewegung der Rollfahrzeuge (2a...2c) mindestens ein umlaufendes Förderelement (4) und ein damit gekoppeltes Antriebsorgan (7) aufweisen, mittels welchem das umlaufende Förderelement (4) mit einer vorwählbaren Umlaufgeschwindigkeit antreibbar ist.

3. Vorrichtung nach Anspruch 2, dadurch gekennzeichnet, dass das Förderelement (7) mit mindestens einem mit dem Förderelement umlaufenden Mitnehmer (9a...9d) ausgerüstet ist, der in Ruhestellung in die Bewegungsbahn der Rollfahrzeuge (2a...2c) ragt und der entgegen einer Rückstellkraft aus der Bewegungsbahn der Rollfahrzeuge (2a...2c) verschwenkbar ist.

4. Vorrichtung nach Anspruch 3, dadurch gekennzeichnet, dass das Förderelement (4) mit einer Mehrzahl von entlang dessen Länge angeordneten und mit dem Förderelement umlaufenden Mitnehmern (9a...9d) ausgerüstet ist.

5. Vorrichtung nach Anspruch 3 oder 4, dadurch gekennzeichnet, dass der bzw. die Mitnehmer (9a...9d) schwenkbar am Förderelement (4) gelagert sind.

6. Vorrichtung nach Anspruch 5, dadurch gekennzeichnet, dass der bzw. die Mitnehmer (9a...9d) mit einem federartigen Rückstellorgan (18) versehen sind, welches den bzw. die Mitnehmer (9a...9d) in eine Ruhestellung zu verschwenken bestrebt ist, in welcher sie in die Bewegungsbahn der Rollfahrzeuge (2a...2c) ragen.

7. Vorrichtung nach einem der Ansprüche 3 bis 6, dadurch gekennzeichnet, dass jeder Mitnehmer (9a...9d) eine erste, in Bewegungsrichtung der Fördermittel gesehen am hinteren Ende des Mitnehmers liegende, zumindest annähernd senkrecht zur Bewegungsrichtung des umlaufenden Förderelements (4) verlaufende Mitnehmerfläche (16) und eine zweite, in Bewegungsrichtung der Fördermittel gesehen am vorderen Ende des Mitnehmers liegende, gegenüber der Bewegungsrichtung der Fördermittel in einem spitzen Winkel geneigt verlaufende Mitnehmerfläche (15) aufweist.

8. Vorrichtung nach einem der vorhergehenden Ansprüche, dadurch gekennzeichnet, dass das Gefälle der Schienenfahrbahn (1) zwischen 0.5 und 2%, vorzugsweise zwischen 1 und 1.4% beträgt.

9. Vorrichtung nach einem der vorhergehenden Ansprüche, dadurch gekennzeichnet, dass das umlaufende Förderelement (4) mindestens eine endlose Kette, mindestens ein endloses Band, mindestens ein endloser Riemen, mindestens ein endloses Seil oder dgl. ist, an welcher bzw. an welchem der bzw. die Mitnehmer (9a...9d) befestigt sind.

10. Vorrichtung nach einem der vorhergehenden Ansprüche, dadurch gekennzeichnet, dass am Entnahmeende (B) der Schienenfahrbahn ein die darauf befindlichen Rollfahrzeuge (2a...2c) stauender Endanschlag (3) vorgesehen ist, der gegebenenfalls von einer in die Bewegungsbahn der Rollfahrzeuge (2a...2c) ragenden Wirkstellung in eine ausserhalb der Bewegungsbahn der Rollfahrzeuge (2a...2c) befindliche Ruhestellung bewegbar ist.

11. Vorrichtung nach Anspruch 2, dadurch gekennzeichnet, dass das Antriebsorgan (7) eine Bremse umfasst.

12. Vorrichtung nach Anspruch 11, dadurch gekennzeichnet, dass die Bremse eine Wirbelstrombremse ist.

13. Vorrichtung nach Anspruch 2, dadurch gekennzeichnet, dass das Antriebsorgan (7) eine Einrichtung zur Regulierung bzw. Konstanthaltung der Drehzahl umfasst.

14. Vorrichtung nach einem der vorhergehenden Ansprüche, mit einer Mehrzahl von gefällebehafteten Schienenfahrbahnen, dadurch gekennzeichnet, dass für den Antrieb der jeweils einer Schienenfahrbahn zugeordneten, umlaufenden Förderelemente ein gemeinsames Antriebsorgan vorgesehen ist.
